# EUROPEAN PATENT SPECIFICATION

(11) **EP 1 110 678 B1**
(45) Date of publication and mention of the grant of the patent: **16.04.2008**
(21) Application number: 00942409.4
(22) Date of filing: 30.06.2000
(51) Int. Cl.: H02K 23/36, B25F 5/00

(54) **PORTABLE MOTOR POWER DEVICE**
TRAGBARES KRAFTAGGREGAT MIT MOTOR
DISPOSITIF PORTABLE D'ALIMENTATION D'UN MOTEUR

(30) Priority: 02.07.1999 JP 18952799; 22.12.1999 JP 36557099
(43) Date of publication of application: 27.06.2001
(73) Proprietor: MATSUSHITA ELECTRIC WORKS, LTD., Kadoma-shi, Osaka-fu 571-8686 (JP)
(72) Inventor: ISHIDA, Yosuke, Yasu-gun Shiga 520-2331 (JP); YAMADA, Tomio, Higashiazai-gun Shiga 529-0142 (JP); MURAKITA, Toru, Omihachiman-shi Shiga 523-0075 (JP); TOYAMA, Kazuto, Hikone-shi Shiga 522-0054 (JP); HASHIMOTO, Koichi, Hikone-shi Shiga 522-0054 (JP); MIYAZAKI, Hiroshi, Hikone-shi Shiga 522-0042 (JP); KUBOTA, Atsumasa, Hikone-shi Shiga 522-0041 (JP); YAMAMOTO, Masao, Yasu-gun Shiga 520-2305 (JP)
(74) Representative: Goddar, Heinz J.
(86) International application number: PCT/JP2000/004329
(87) International publication number: WO 2001/002139

(56) References cited:
- JP-A- 3 273 900
- JP-A- 5 112 062
- JP-A- 7 099 787
- JP-A- 63 007 277
- JP-U- 2 140 775
- US-A- 3 525 912
- US-A- 4 835 410
- US-A- 4 988 930

## Description

### TECHNICAL FIELD

The present invention relates to a portable motor powered device according to the preamble of claim 1, which is capable of operating on either one of a low DC voltage supplied from a codeless battery pack and a high DC voltage supplied from a corded power pack. Such a device is known from document US A 835 410 A.

### BACKGROUND ART

WO 89/07997 A discloses a dual-mode system for motor powered device which utilizes a cordless battery pack and a corded power pack selectively for energizing a motor. The corded battery pack contains cells to provide a DC voltage to the motor. The corded power pack includes a power code for receiving an AC source voltage and a converter for converting the AC voltage to the DC voltage to be supplied to the motor. In order to make the corded power pack compatible with the cordless battery pack, the corded power pack further includes a step-down transformer. However, such transformer is generally bulky and heavy, and therefore adds extra dimension and weight to the corded power pack as compared to the cordless battery pack. This is not satisfactory when the powered device is required to be compact and lightweight enough to be completely portable.

### DISCLOSURE OF THE INVENTION

In view of the above insufficiency, the present invention has been accomplished to provide a portable motor powered device which is capable of operating on a cordless battery pack as well as a corded power pack, yet enabling to reduce the size and weight of the corded power pack to be truly compatible with the corded battery pack in size and weight. The device in accordance with the present invention comprises a housing accommodating a DC motor. The cordless battery pack is detachably connected to the housing and has a battery which supplies a low DC voltage for operating the DC motor. The corded power pack is detachably connected to the housing and supplies a high DC voltage for operating the DC motor. The corded power pack includes a power cord adapted to be connected to receive an AC source voltage and a converter for converting the AC source voltage into the high DC voltage. The characterizing feature of the present invention resides in that the DC motor includes a rotor which is provided with a first winding and a second winding, the first winding being coupled to receive the low DC voltage for driving the DC motor, and the second winding being coupled to receive the high DC voltage for driving the motor. Thus, the DC motor can be driven by either one of the low DC voltage supplied from the cordless battery pack and the high DC voltage supplied from the corded power pack. Accordingly, the corded power pack can be designed to supply the high DC voltage directly converted from the AC voltage source and therefore dispense with a step-down transformer of bulky and heavy nature. Thus, the corded power pack can be made compact and light-weight as or even less than the cordless battery pack, so that the motor powered device attached with the corded power pack can be made compact and lightweight sufficiently to be truly portable.

Preferably, the first and second windings are designed to give the same torque-speed characteristic when operated at the low DC voltage and at the high DC voltage, respectively for assuring consistent work by the device.

The housing includes a first electrical path connecting the low DC voltage to the first winding and a second electrical path connecting the high DC voltage to the second winding. The first and second electrical paths are preferred to be separated from each other so that they can be designed independently from each other and therefore in accordance with specific requirements as to insulation distance and current carrying capacity. That is, the second electrical path, which carries a small current from the high DC voltage, can be designed to be have reduced conductor's size as compared to the first electrical path carrying a large current from the low DC voltage. And, the first electrical path, which carries a large current from the low DC voltage, can be designed to have a short insulation distance as compared to the second electrical path carrying a small current from the high DC voltage.

It is preferred that the first winding is designed to operate on the low DC voltage of 2.4 to 48 volts, while the second winding is designed to operate on the high DC voltage of 100 to 300 volts.

Also, the cordless battery pack and the corded power pack may have respective casings of similar shape which are selectively attached to the housing.

The casing of the cordless battery pack includes a first plug for insertion into a socket of the housing, and the casing of the corded power pack includes a second plug for insertion into the same socket. The first plug has a low voltage contact for electrical connection with a first terminal provided in the socket, while the second plug having a high voltage connector for electrical connection with a second terminal provided in the socket.

The corded power pack may include a ground lead extending therefrom for connection to the ground. The second connector has a ground terminal for electrical connection between the motor and the ground line. Thus, the motor power device can be grounded when using the high DC voltage from the corded power pack.

Further, the corded power pack includes a circuit board on which the converter is mounted. The circuit board may include a grounding line for connection between the ground terminal and the ground lead. The ground line is connected to a noise reduction capacitor on the printed circuit board.

Preferably, one end of the power cord is supported to the casing of the corded power pack to pivot about a pivot axis so that a user is easy to operate the device without being hindered by the power cord. In this connection, the corded power pack may further include a click mechanism for retaining the one end of the power cord at least one angular position around the pivot axis. Thus, the device can be stored easily in place with the power cord being latched.

The device may include a speed sensor which is connectable to non-energized one of the first and second windings to detect an alternating voltage developed across the non-energized winding one of said first and second windings for sensing a rotation speed of the motor while the other one of the first and second windings is energized to drive the motor. Thus, the non-energized one of the first and second windings can be best utilized for controlling the rotation speed of the motor.

The housing includes a power switch for connecting the low and high DC voltages to the first and second windings, respectively. The rotor includes a core provided with the first and second windings, and a rotor shaft extending through the core. The rotor shaft carries first and second commutators respectively connected to the first and second windings. The first and second commutators are preferably disposed on opposite sides of the core to be spaced axially along the rotor shaft for contact with first and second brushes which supply currents respectively from the low and high DC voltages. The first brush is connected to the power switch through a low voltage line, while the second brush is connected to the power switch through a high voltage line. The low voltage line is preferably routed within the housing a shorter distance than the high voltage line. Thus, the low voltage lime carrying a relatively large current can reduce ohmic loss.

Further, the rotor shaft is preferred to carry a cooling fan which is disposed adjacent to the first brush for effectively cooling the first brush carrying the large current and having contact resistance with the first commutator.

These and still other objects and advantageous features of the present invention will become apparent from the following description of the preferred embodiment when taken in conjunction with the attached drawings.

### BRIEF DESCRIPTION OF THE DRAWINGS

FIG. 1 is a front view partly in section of a portable motor powered device in the form of a power tool, shown with a cordless battery pack and a coded power pack detached therefrom, in accordance with a preferred embodiment of the present invention;
FIG. 2 is a front view of the cordless battery pack;
FIG. 3 is a front view of the corded power pack as attached to the power tool;
FIG. 4 is a perspective view of the corded power pack;
FIG. 5 is a front view partly in section of a DC motor utilized in the above power tool;
FIG. 6 is a sectional view taken along line 6-6 of FIG. 5;
FIG. 7 is a circuit diagram of the power tool;
FIG. 8 is a schematic view illustrating an internal wiring of the power tool;
FIG. 9 is an exploded view illustrating an electrical connection of the corded power pack to a corresponding terminal provided in a power tool housing;
FIG. 10 is a partial sectional view illustrating a modified housing of the power tool;
FIG. 11 is an exploded perspective view of the corded power pack; and
FIGS. 12A and 12B are partial views respectively illustrating operations of a click mechanism included in the coded power pack for pivotal support of one end of a power cord.

### BEST MODE FOR CARRYING OUT THE INVENTION

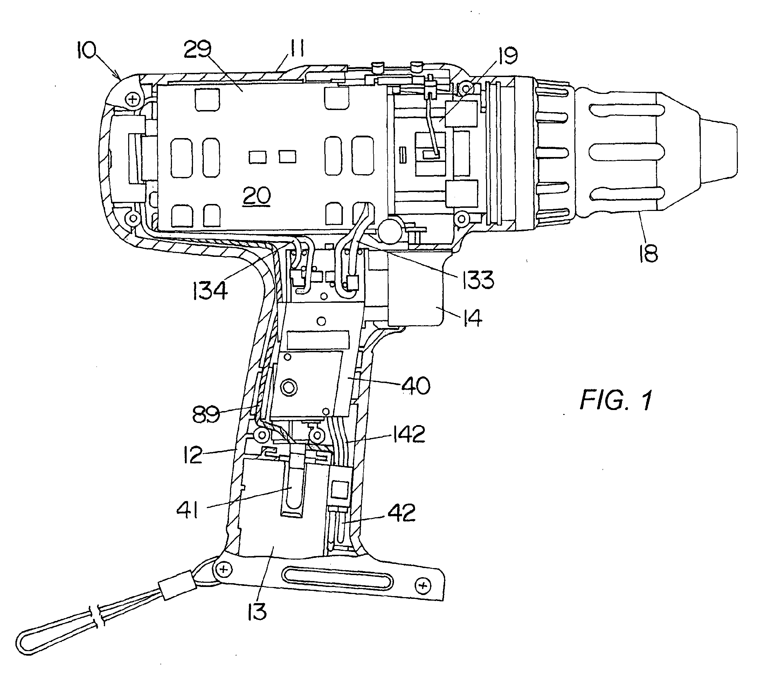

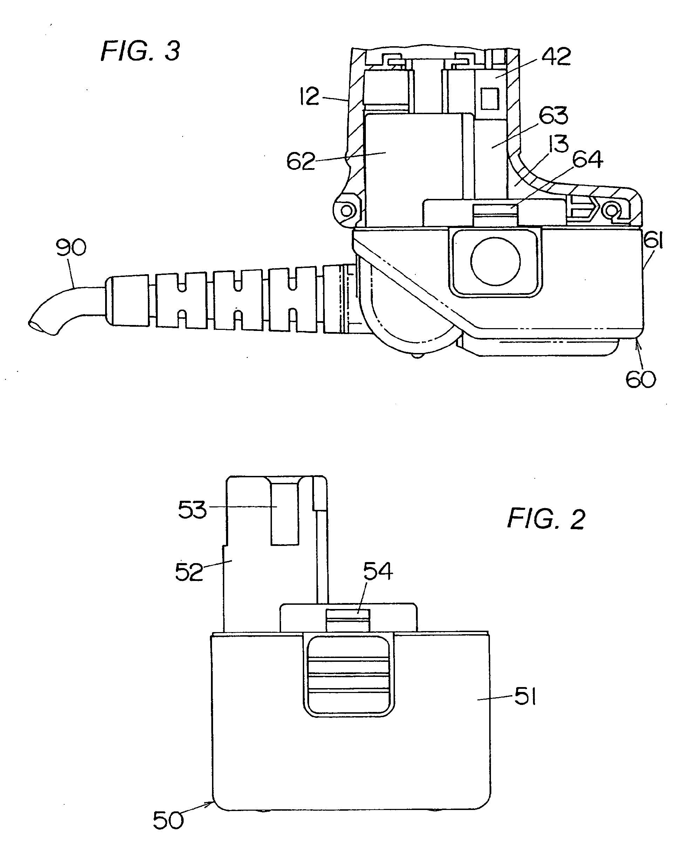

Referring now to FIGS. 1 to 2, there is shown a portable motor powered device in the form of a power tool in accordance with a preferred embodiment of the present invention. The power tool is designed to be energized selectively by a cordless battery pack **50** and a corded power pack **60.** The power tool includes a housing **10** accommodating therein a DC magnet motor **20** and a power switch **40** for electrical connection and disconnection of the motor 20 to and from the cordless battery pack **50** and the corded power pack **60**. The housing is T-shaped to have a cylinder **11** and a handle grip **12** extending from the lengthwise center of the cylinder **11.** The motor **20** is disposed in a rear half of the cylinder **11** and has a rotor shaft **23** connected through a reduction gear set **19** to a chuck **18** at the front end of the cylinder for rotating a tool bit such as a drill bit and a screw driver bit held by the chuck **18.** The power switch **40** is disposed within the upper portion of the handle grip **12** adjacent to the cylinder **11** and is actuated by a switch handle **14** at the upper end of the handle grip **12.** The lower end of the handle grip **12** is shaped to have a socket **13** for detachably receiving portions of the cordless battery pack **50** and the corded power pack **60.** For this purpose, the battery pack **50** and the power pack **60** are respectively provided with hooks **54** and **64** for mechanical engagement with associated recesses formed around a bottom opening of the socket **13,** as shown in FIGS. 2 and 3. The power switch **40** is connected to a first terminal **41** which extends into the socket **13** for electrical connection with the battery pack **50,** and is also connected through leads **142** to a second terminal **42** which is located in the socket for electrical connection with the power pack **60.**

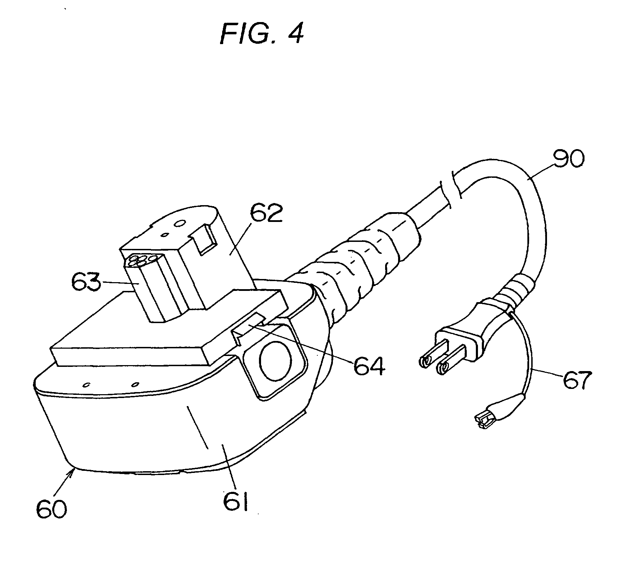

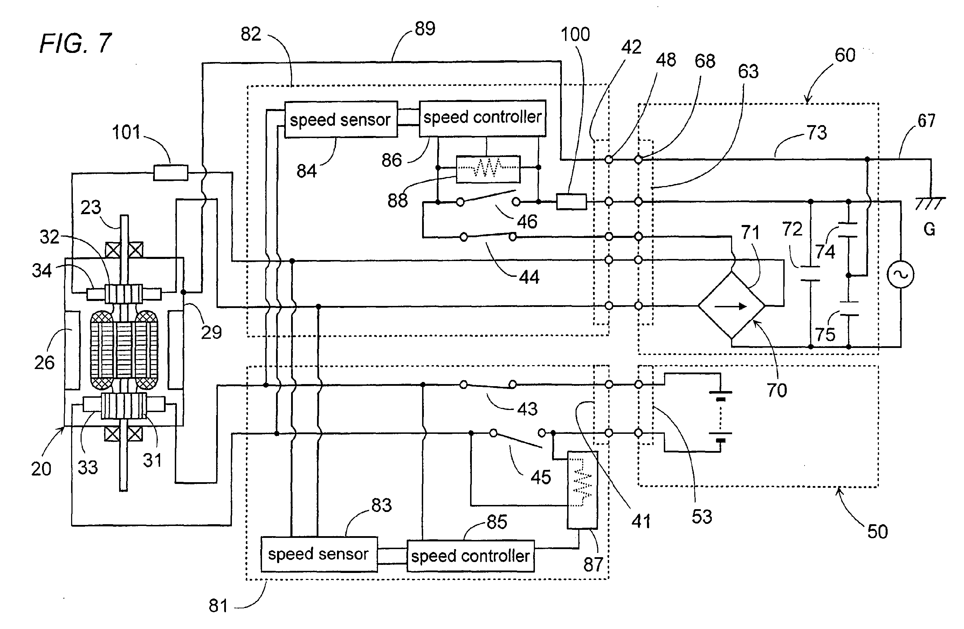

As shown in FIG. 2, the cordless battery pack **50** has a casing **51** containing therein rechargeable cells providing a low DC voltage in the range of 2.4 to 40 volts. The casing has a plug **52** which fits into the socket and carries a pair of contacts **53** for electrical connection with the first terminal **41** of the power switch **40.** As shown in FIGS. 3 and 4, the corded power pack **60** has a casing **61** from which a power cord **90** extends for connection with an ac mains, i.e., AC source voltage. The casing **61** incorporates a converter **70** which converts the source AC voltage into a smoothed AC voltage in the range of 100 to 300 volts. The casing **61** also includes a plug **62** which fits into the socket **13** and is provided with a shielded connector **63** for electrical connection with the second terminal **42** of the power switch **40.** As shown in FIG. 7, the power switch **40** includes a pair of main contacts **43** and **44** which are simultaneously actuated by the switch handle **14** to connect and disconnect the motor **20** to and from the low DC voltage supplied from the cordless battery pack **50** when it is attached to the power tool, and the high DC voltage supplied from the corded power pack **60** when it is attached to the power tool.

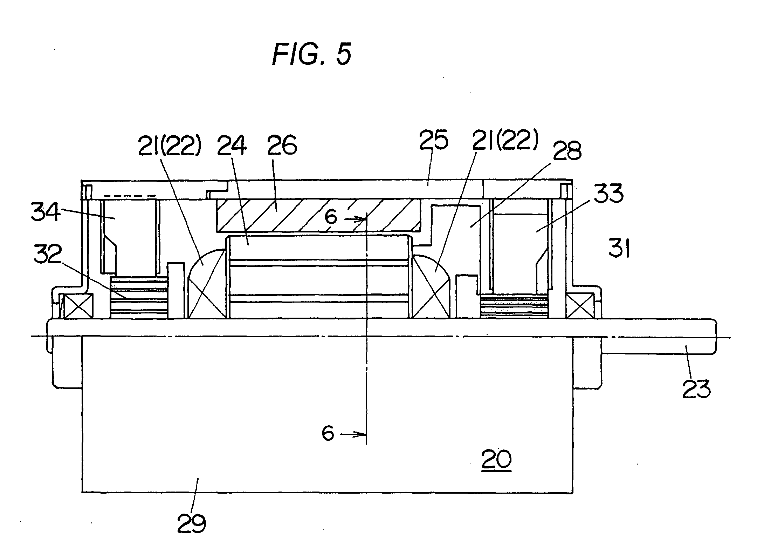

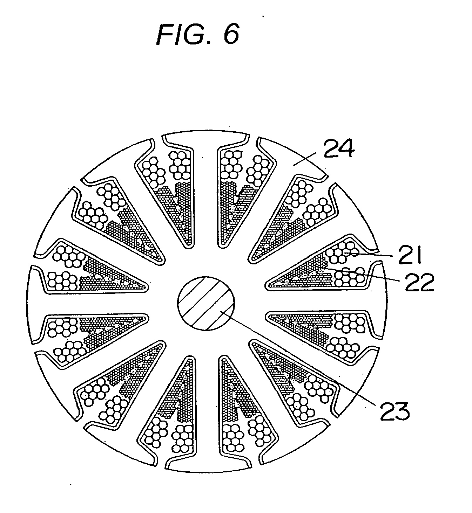

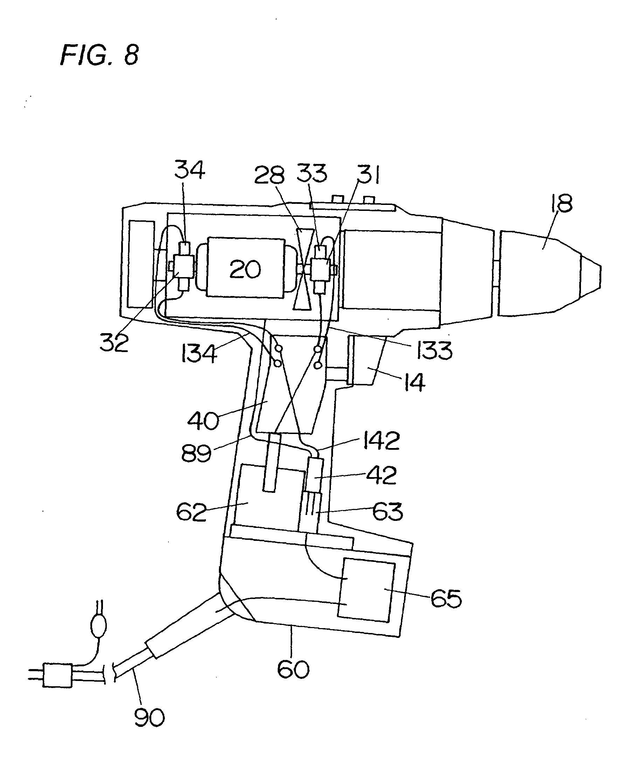

The DC motor **20** is designed to operate either one of the low DC voltage and the high DC voltage. As shown in FIGS. 5 and 6, the motor **20** comprises a stator **25** mounting a plurality of permanent magnets **26,** and a rotor with the rotor shaft **23** and a plurality of cores **24** extending radially from the rotor shaft **23.** The rotor carries a first winding **21** and a second winding **22** which are independently wound around the cores **24** and are connected to receive currents respectively from the low DC voltage and the high DC voltage so that the motor **20** is driven to rotate by either one of the low and high DC voltages. As shown in FIG. 6, the first winding **21** which receives the current from the battery pack **50** of limited energy source is designed to have a large cross section in order to minimize a current loss, while the second winding **22** which receives the current through the power pack **60** from the AC mains of virtually unlimited energy source is designed to have a small cross section in order to increase the number of turns for equalizing the torque-speed characteristic of the motor when the first winding **21** is energized and the second winding **22** is energized. The rotor shaft **23** is provided with a first commentator **31** and a second commutator **32** which are on opposite sides of the cores **24** to be axially spaced along the length of the rotor shaft **23.** In correspondence to the first and second commutators **31** and **32,** the motor **20** has first and second brushes **33** and **34** for supplying the currents to the first and second windings respectively from the low DC voltage and the high DC voltage. As shown in FIG. 8, the first brush **33** is located adjacent the front end of the motor **20** and is connected to the power switch **40** through leads **133,** while the second brush **34** is located adjacent the rear end of the motor and is connected to the power switch **40** through leads **134.** The lead **133,** which defines a low voltage line flowing a relatively large current from the battery pack **50,** is routed a shorter distance than the lead **134** defining a high voltage path for flowing a small current from the power pack **60.** Thus, the lead **133** flowing the large current can give only a minimum loss or minimum resistive heating. Further, the rotor shaft **23** carries a cooling fan **28** immediately adjacent to the first brush **33** to effectively cool the first brush **33** as well as the first commentator **31** carrying the large current.

Now referring back to FIG. 7, a detailed explanation is made as to a circuit arrangement provided for electrical connection of the motor **20** with the battery pack **50** as well as the power pack **60.** The circuit is composed of a low voltage circuit **81** for energizing the first winding **21** by the battery pack **50** and a high voltage circuit **82** for energizing the second winding **22** by the power pack **60.** The low voltage circuit **81** includes, in addition to the main contact **43,** a sub contact **45,** a speed sensor **83,** a speed controller **85,** and a semiconductor element **87** capable of flowing a portion of the current from the battery pack **50.** Likewise, the high voltage circuit **82** includes, in addition to the main contact **44,** a sub contact **46,** a speed sensor **84,** a speed controller **86,** and a semiconductor element **88** capable of flowing a portion of the current from the power pack **60.** The sub contacts **45** and **46** are normally kept open and are actuated to close only when the switch handle **14** is pressed deeply to a further extent. The semiconductor devices **87** and **88** are connected across the sub contacts **45** and **46** to flow therethrough portions of the currents respectively from the battery pack **50** and the power pack **60** until the sub contacts **45** and **46** are closed, so as to regulate the amount of the currents being respectively fed to first and second windings **21** and **22** in accordance with commands from the speed controllers **85** and **86.** Each of the speed controllers **85, 86** is connected to the corresponding one of the speed sensors **83** and **84** to receive therefrom a signal indicative of a current motor speed and in turn provides the command which regulates the current for control of the motor speed in a known feedback manner. Each speed sensor **83** and **84** are connected across each one of the second and first windings **22** and **21** to develop an alternating voltage in proportion to the current motor speed. The speed detection is made by use of the non-energized one of the first and second windings **21** and **22.** That is, when the first winding **21** is energized to drive the motor **20,** the non-energized second winding **22** serves to detect the motor speed, and vice versa. When the switch handle **14** is pressed deeply, the sub contacts **45** and **46** are closed to shunt the semiconductor elements **87** and **88,** respectively, thereby disabling the speed control and allowing the motor to operate at its full power.

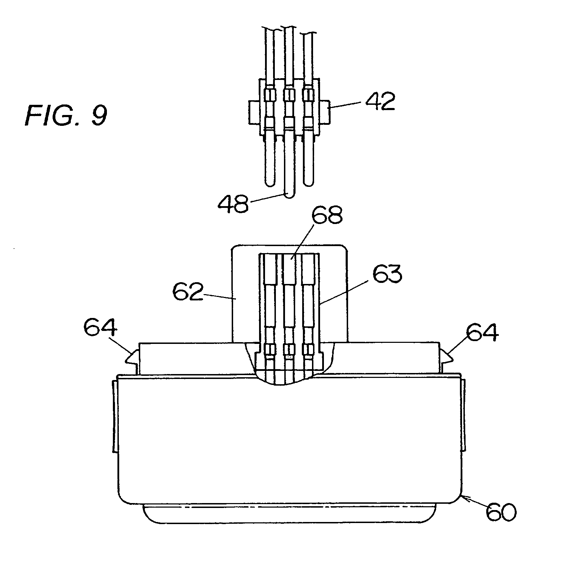

As is shown in FIG. 7, the main switch **44** and the sub switch **46** of the high voltage circuit **82** are inserted in an AC voltage line leading to the input of a rectifier **71** forming the converter **70** so that these switches have less chances of suffering arc welding than being inserted in a DC voltage line. In this consequence, the second terminal **42** of the power pack **60** is configured to be of a five-pin arrangement including a pin for a ground line **89** leading to a motor casing **29.** The corded power pack **60** also includes a ground line **73** extending from a ground terminal **68** of the shielded connector **63** to a ground lead **67** which extends outwardly of the power pack **60** along the power cord **90** for connection of the motor casing **29** to the ground. The ground line **73** is formed on a circuit board **65** mounting thereon the converter **70** composed of the rectifier **71** and a smoothing capacitor **72.** The ground line **73** is connected on the circuit board **65** to noise reduction capacitors **74** and **75.** As shown in FIG. 9, the second terminal **42** has a ground pin **48** for connection with the ground terminal **G** of the shielded connector **63.** The ground pin **48** is made longer than the other pins so as to engage first and disengage last to and from the ground terminal **68** of the shielded connector **63.**

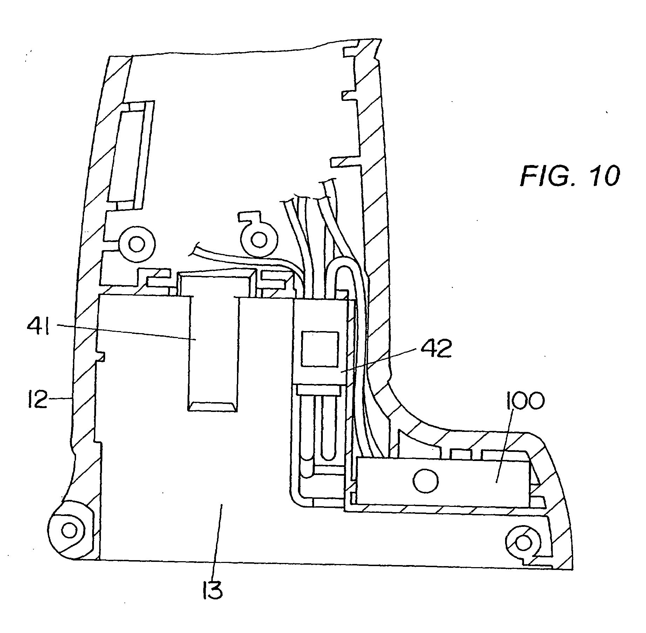

The power tool is preferably provided with an overload protective element **100** such as a thermostat in the AC voltage line feeding the source AC voltage to the power pack **60** to provide overload protection of the power tool when the motor sees an overload current from the AC source voltage through the corded power pack. The overload protective element may be located in the high voltage circuit **82,** as shown in FIG. 7, or in the power pack **60.** When installed in the high voltage circuit, the element is preferred at the lower end of the hand grip **12,** as shown in FIG. 10, a site remote from the motor **20** to be less thermally affected thereby. Another overload protective element **101** such as a thermal fuse may be additionally provided in a line of feeding the current to the motor **20** from the power pack and adjacent to the motor **20** for protection of a user as well as the power tool against possible overheating of the motor.

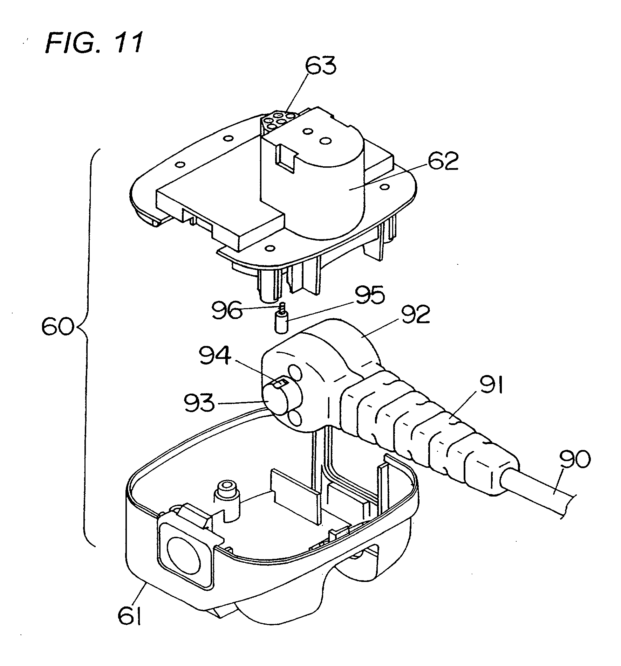

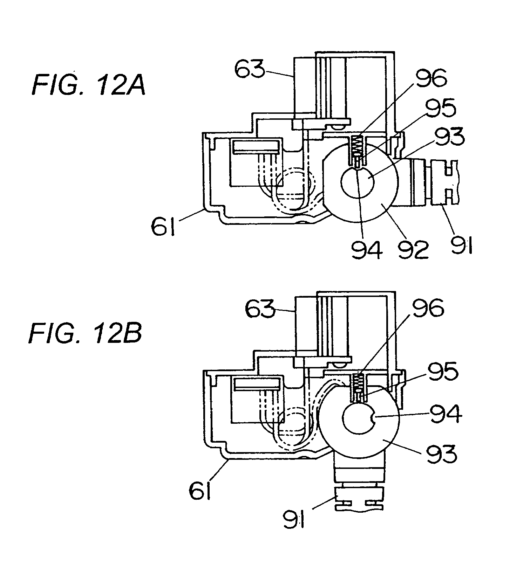

As shown in FIGS. 11 and 12, the power cord **90** is supported to the casing **61** of the corded power pack **60** to be freely pivotable so that the power cord **90** can depend vertically irrespective of an orientation angle of the power tool for facilitating the handling of the power tool. For this purpose, the power cord **90** is formed at its end adjacent to a strain relief **91** with a rounded joint **92** having a pair of pivot pins **93.** The pivot pins **93,** which are engaged loosely into corresponding bearing holes in the lower end of the casing **61,** are provided respectively with dents **94** for clicking engagement with corresponding latches **95** supported to the casing **61.** The latches **95** constitutes a click mechanism of holding the joint **92** at one angular position about a pivot axis defined by the pivot pins **93.** At the angular position, the power cord **90** extends horizontally, as shown in FIG. 12A, i.e., in a direction generally parallel to the cylinder **11** of the power tool. Thus, the power cord **90** can be held in a position suitable for storing the power tool in a place. In use, the power cord **90** is forced to pivot from the clicked poison by which the latches **95** are disengaged out of the dents **94** against a bias spring **96,** as shown in FIG. 12B, leaving the power cord to pivot freely about the pivot axis.

## Claims

1. A portable motor powered device comprising:
a housing (10) accommodating a DC motor (20);
a cordless battery pack (50) detachably connected to said housing (10) and having a battery which supplies a low DC voltage for operating said DC motor (20); and
a corded power pack (60) detachably connected to said having and having a power cord (90) adapted to be connected to receive an AC source voltage **characterized in that** the DC motor operates selectively at two different DC voltages; the corded power pack (60) supplies a high DC voltage for operating said motor and comprises a converter for converting said AC source voltage into said high DC voltage;
wherein
said DC motor includes a rotor provided with a first winding (21) and a second winding (22), said first winding (21) being coupled to receive said low voltage for driving said DC motor, and said second winding (22) being coupled to receive said high voltage for driving said DC motor.

2. The portable motor powered device as set forth in claim 1, wherein
said first and second windings are designed to give the same torque-speed characteristic to said DC motor when operated at said low DC voltage and at said high DC voltage, respectively.

3. The portable motor powered device as set forth in claim 1, wherein
said housing includes a first electrical path connecting said low DC voltage to said first winding, and a second electrical path connecting said high DC voltage to said second winding, said first and second electrical paths being separated from each other.

4. The portable motor powered device as set forth in claim 1, wherein
said first winding is designed to operate on said low DC voltage of 2.4 to 48 volts, while said second winding is designed to operate on said high DC voltage of 100 to 300 volts.

5. The portable motor powered device as set forth in claim 1, wherein
said cordless battery pack and said corded power pack have respective casings of similar shape which are selectively attached to said housing.

6. The portable motor powered device as set forth in claim 5, wherein
the casing of said cordless battery pack includes a first plug for insertion into a socket of said housing, and the casing of said corded power pack includes a second plug for insertion into said socket, said first plug having a low voltage contact for electrical connection with a first terminal provided in said socket, and said second plug having a high voltage connector for electrical connection with a second terminal provided in said socket.

7. The portable motor powered device as set forth in claim 6, wherein
said corded power pack has a ground lead extending therefrom for connection to the ground, said second connector including a ground terminal for electrical connection between said motor and said ground lead.

8. The portable motor powered device as set forth in claim 7, wherein
said corded power pack includes a circuit board on which said converter is mounted, said circuit board including a ground line for connection between said ground terminal and said ground lead, said ground line being connected to a noise reduction capacitor on said printed circuit board.

9. The portable motor powered device as set forth in claim 1, wherein
said corded power pack has a casing to which one end of said power cord is supported to pivot about a pivot axis.

10. The portable motor powered device as set forth in claim 9, wherein
said corded power pack includes a click mechanism for retaining said power cord at least one angular position around said pivot axis.

11. The portable motor powered device as set forth in claim 1, further including:
a speed sensor which is connectable to non-energized one of said first and second windings to detect an alternating voltage developed across said non-energized one of said first and second windings for sensing a rotation speed of said motor while the other one of said first ands second windings is energized to drive said motor.

12. The portable motor powered device as set forth in claim 1, wherein
said housing includes a power switch for connecting said low and high DC voltages to said first and second windings, respectively,
said rotor including a core provided with said first and second windings and a rotor shaft extending through said core, said rotor shaft carrying first and second commutators respectively connected to said first and second windings, said first and second commutators being disposed on opposite sides of said core to be spaced axially along said rotor shaft and being in contact with first and second brushes which supply currents respectively from said low and high DC voltages,
said first bush being connected to said power switch through a low voltage line, said second brush being connected to said power switch through a high voltage line,
said low voltage line being routed within said housing a shorter path than said high voltage line.

13. The portable motor powered device as set forth in claim 12, wherein
said rotor shaft carries a cooling fan which is disposed adjacent to said first brush.

## Patentansprüche

1. Ein tragbares motorbetriebenes Gerät, mit:
einem Gehäuse (10), das einen DC Motor (20) aufnimmt;
eine kabellose Batterieeinheit (50), die lösbar mit einem Gehäuse (10) verbunden ist und eine Batterie aufweist, die eine niedrige DC Spannung zum Betreiben des DC Motors (20) liefert; und
eine verkabelte Leistungseinheit (60) die lösbar mit dem Gehäuse verbunden ist und ein Versorgungskabel (90) hat, das dazu eingerichtet ist, zur Aufnahme einer AC Quellenspannung verbunden zu werden,
**dadurch gekennzeichnet, dass**
der DC Motor wahlweise bei zwei unterschiedlichen DC Spannungen arbeitet, die verkabelte Leistungseinheit (60) eine hohe DC Spannung zum Betreiben des Motors liefert und einen Konverter zum Wandeln der AC Quellenspannung in die höhere DC Spannung ausweist; wobei
der DC Motor einen Rotor aufweist, der mit einem ersten Wicklung (21) und einer zweiten Wicklung (22) versehen ist, wobei die erste Wicklung (21) zum Aufnehmen der niedrigen Spannung zum Betreiben des DC Motors gekoppelt ist und die zweite Wicklung (22) zum Aufnehmen der hohen Spannung zum Betreiben des DC Motors gekoppelt ist.

2. Das tragbare, motorbetriebene Gerät in Anspruch 1, wobei die erste und die zweite Wicklung dazu ausgebildet sind, dem DC Motor dieselbe Drehmoment/Spannung Charakteristik geben, wenn er bei der niedrigen DC Spannung beziehungsweise bei der hohen DC Spannung betrieben wird.

3. Das tragbare, motorbetriebene Gerät in Anspruch 1, wobei das Gehäuse einen ersten elektrischen Weg, der die niedrige DC Spannung mit der ersten Wicklung verbindet und einen zweiten elektrischen Weg, der die hohe DC Spannung mit der zweiten Wicklung verbindet, aufweist, wobei der erste und der zweite elektrische Weg voneinander getrennt sind.

4. Das tragbare, motorbetriebene Gerät in Anspruch 1, wobei die erste Wicklung dazu ausgebildet ist, bei einer niedrigen Spannung von 2,4 bis 48 V zu arbeiten, während die zweite Wicklung dazu ausgebildet ist, bei der zweiten hohen DC Spannung von 100 bis 300 V zu arbeiten.

5. Das tragbare, motorbetriebene Gerät in Anspruch 1, wobei die kabellose Batterieeinheit und die verkabelte Batterieeinheit jeweils Gehäuse von ähnlicher Form haben, die wahlweise an das Gehäuse anzubringen sind.

6. Das tragbare, motorbetriebene Gerät in Anspruch 5, wobei das Gehäuse der kabellosen Batterieeinheit einen ersten Stecker zum Einsetzen in eine Steckdose des Gehäuses aufweist und das Gehäuse der verkabelten Batterieeinheit einen zweiten Stecker zum Einsetzen in die Steckdose aufweist, wobei der erste Stecker einen Niederspannungskontakt für eine elektrische Verbindung mit einem ersten Anschluss, der in dem Sockel vorgesehen ist, aufweist, und der zweite Stecker einen Hockspannungskonnektor zur elektrischen Verbindung mit einem zweiten Anschluss, der in der Steckdose vorgesehen ist aufweist.

7. Das tragbare, motorbetriebene Gerät in Anspruch 6, wobei die verkabelte Leistungseinheit eine Masseleitung hat, die sich von dieser zur Verbindung mit Masse erstreckt, wobei der zweite Konnektor einen Masseanschluss zur elektrischen Verbindung des Motor mit dem Masseanschluss aufweist.

8. Das tragbare, motorbetriebene Gerät in Anspruch 7, wobei die verkabelte Leistungseinheit eine Schaltkarte aufweist, auf der der Wandler montiert ist, wobei die Schaltkarte einen Massedraht zur Verbindung mit dem Masseanschluss und der Masseleitung hat, wobei der Massedraht mit einem Rauschreduktionskondensator auf der gedruckten Schaltkarte verbunden ist.

9. Das tragbare, motorbetriebene Gerät in Anspruch 1, wobei die verkabelte Leistungseinheit ein Gehäuse aufweist, an das ein Ende des Leistungskabels gestützt wird, um um eine Schwenkachse zu verschwenken.

10. Das tragbare, motorbetriebene Gerät in Anspruch 9, wobei die verkabelte Leistungseinheit einen Klickmechanismus zum Rückhalten des Spannungskabels in wenigstens einer Winkelposition um die Drehachse aufweist.

11. Das tragbare, motorbetriebene Gerät in Anspruch 1, weiter mit:
einem Geschwindigkeitssensor, der zum Nicht-Erregen der ersten oder der zweiten Wicklung zum Erkennen einer Wechselspannung, die sich über die nicht-erregten ersten bzw. zweiten Wicklung entwickelt, verbindbar ist, zum Messen einer Drehgeschwindigkeit des Motors, während die zweite bzw. die erste Wicklung erregt wird, um den Motor anzutreiben.

12. Das tragbare, motorbetriebene Gerät in Anspruch 1, wobei
das Gehäuse einen Leistungsschalter zum Verbinden der niedrigen bzw. der hohen DC Spannung mit der ersten bzw. der zweiten Wicklung aufweist;
der Rotor einen Kern aufweist, der mit der ersten und der zweiten Wicklung verbunden ist und eine Rotorwelle, die sich durch den Kern erstreckt,
die Rotorwelle erste und zweite Kommutatoren trägt, die mit der ersten bzw. der zweiten Wicklung verbunden sind,
die ersten und die zweiten Kommutatoren auf gegenüberliegenden Seiten des Kerns angeordnet sind, um axial entlang der Rotorwelle beabstandet zu sein und in Kontakt mit den ersten und den zweiten Bürsten sind, die Strom von der ersten bzw. der zweiten DC Spannung liefert;
die erste Bürste mit dem Leistungsschalter über eine Niederspannungsleitung verbunden ist und die zweite Bürste mit dem Leistungsschalter über eine Hochspannungsleitung verbunden ist, und
die Niederspannungsleitung innerhalb des Gehäuses auf einem kürzeren Weg als die Hochspannungsleitung verläuft.

13. Das tragbare, motorbetriebene Gerät in Anspruch 12, wobei die Rotorwelle ein Kühlgebläse trägt, das benachbart der ersten Bürste angeordnet ist.

## Revendications

1. Dispositif portable à moteur comportant :
un logement (10) renfermant un moteur à courant continu (20) ;
un bloc de batterie sans fil (50) connecté de manière détachable par rapport audit logement (10) et ayant une batterie qui alimente une basse tension de courant continu pour faire fonctionner ledit moteur à courant continu (20) ; et
un bloc d'alimentation à fil (60) connecté de manière détachable par rapport audit logement et ayant un cordon d'alimentation (90) adapté pour être connecté afin de recevoir une tension de source de courant alternatif **caractérisé en ce que** le moteur à courant continu fonctionne de manière sélective à deux différentes tensions de courant continu ; le bloc d'alimentation à fil (60) alimente une haute tension de courant continu pour faire fonctionner ledit moteur et comporte un convertisseur permettant de convertir ladite tension de source de courant alternatif en ladite haute tension de courant continu ;
dans lequel
ledit moteur à courant continu comprend un rotor mis en oeuvre avec un premier enroulement (21) et un deuxième enroulement (22), ledit premier enroulement (21) étant couplé pour recevoir ladite basse tension à des fins d'entraînement dudit moteur à courant continu, et ledit deuxième enroulement (22) étant couplé pour recevoir ladite haute tension à des fins d'entraînement dudit moteur à courant continu.

2. Dispositif portable à moteur selon la revendication 1, dans lequel ledit premier enroulement et ledit deuxième enroulement sont conçus pour procurer la même caractéristique couple-vitesse audit moteur à courant continu quand le fonctionnement se fait à ladite basse tension de courant continu et à ladite haute tension de courant continu, respectivement.

3. Dispositif portable à moteur selon la revendication 1, dans lequel ledit logement comprend un premier passage électrique connectant ladite basse tension de courant continu audit premier enroulement, et un deuxième passage électrique connectant ladite haute tension de courant continu audit deuxième enroulement, ledit premier passage électrique et ledit deuxième passage électrique étant séparés l'un par rapport à l'autre.

4. Dispositif portable à moteur selon la revendication 1, dans lequel ledit premier enroulement est conçu pour fonctionner à ladite basse tension de courant continu de 2,4 à 48 volts, alors que ledit deuxième enroulement est conçu pour fonctionner à ladite haute tension de courant continu de 100 à 300 volts.

5. Dispositif portable à moteur selon la revendication 1, dans lequel ledit bloc de batterie sans fil et ledit bloc d'alimentation à fil ont des boîtiers respectifs de forme similaire qui sont attachés de manière sélective audit logement.

6. Dispositif portable à moteur selon la revendication 5, dans lequel le boîtier dudit bloc de batterie sans fil comprend une première fiche à des fins d'insertion dans une prise dudit logement, et le boîtier dudit bloc d'alimentation à fil comprend une deuxième fiche à des fins d'insertion dans ladite prise, ladite première fiche ayant un contact basse tension à des fins de connexion électrique avec une première borne mise en oeuvre dans ladite prise, et ladite deuxième fiche ayant un connecteur haute tension à des fins de connexion électrique avec une deuxième borne mise en oeuvre dans ladite prise.

7. Dispositif portable à moteur selon la revendication 6, dans lequel ledit bloc d'alimentation à fil a un fil de mise la terre s'étendant en provenance de celui-ci à des fins de connexion à la terre, ledit deuxième connecteur comprenant une borne de mise à la terre à des fins de connexion électrique entre ledit moteur et ledit fil de mise à terre.

8. Dispositif portable à moteur selon la revendication 7, dans lequel ledit bloc d'alimentation à fil comprend une carte de circuit imprimé sur laquelle ledit convertisseur est monté, ladite carte de circuit imprimé comprenant une ligne de mise à la terre à des fins de connexion entre ladite borne de mise à la terre et ledit fil de mise à terre, ladite ligne de mise à la terre étant connectée à un condensateur réducteur de bruit sur ladite carte de circuit imprimé.

9. Dispositif portable à moteur selon la revendication 1, dans lequel ledit bloc d'alimentation à fil a un boîtier au niveau duquel une extrémité dudit cordon d'alimentation est supportée à des fins de pivotement au niveau d'un axe de pivot.

10. Dispositif portable à moteur selon la revendication 9, dans lequel ledit bloc d'alimentation à fil comprend un mécanisme à déclic permettant de retenir ledit cordon d'alimentation selon au moins une position angulaire au niveau dudit axe de pivot.

11. Dispositif portable à moteur selon la revendication 1, comprenant par ailleurs :
un capteur de vitesse pouvant être connecté sur un enroulement non alimenté dudit premier enroulement et dudit deuxième enroulement afin de détecter une tension alternative développée en travers dudit un quelconque enroulement non alimenté dudit premier enroulement et dudit deuxième enroulement afin de capter une vitesse de rotation dudit moteur pendant que ledit autre quelconque dudit premier enroulement et dudit deuxième enroulement est alimenté pour entraîner ledit moteur.

12. Dispositif portable à moteur selon la revendication 1, dans lequel
ledit logement comprend un interrupteur d'alimentation permettant de connecter ladite basse tension de courant continu et ladite haute tension de courant continu audit premier enroulement et audit deuxième enroulement, respectivement,
ledit rotor comprenant une couronne mise en oeuvre avec ledit premier enroulement et ledit deuxième enroulement et un arbre de rotor s'étendant au travers de ladite couronne, ledit arbre de rotor portant le premier commutateur et le deuxième commutateur respectivement connectés audit premier enroulement et audit deuxième enroulement, ledit premier commutateur et ledit deuxième commutateur étant disposés des côtés opposés de ladite couronne pour être espacés axialement le long dudit arbre de rotor et étant en contact avec le premier balai et le deuxième balai qui alimentent des courants respectivement en provenance de ladite basse tension de courant continu et de ladite haute tension de courant continu,
ledit premier balai étant connecté audit interrupteur d'alimentation par le biais d'une ligne basse tension, et ledit deuxième balai étant connecté audit interrupteur d'alimentation par le biais d'une ligne haute tension,
ladite ligne basse tension étant acheminée à l'intérieur dudit logement par un passage plus court par rapport à ladite ligne haute tension.

13. Dispositif portable à moteur selon la revendication 12, dans lequel ledit arbre de rotor porte un ventilateur de refroidissement qui est disposé de manière adjacente par rapport audit premier balai.
